# EUROPEAN PATENT APPLICATION

(11) **EP 4 130 434 A1**
(43) Date of publication of application: **08.02.2023**
(21) Application number: 22189352.2
(22) Date of filing: 08.08.2022
(51) Int. Cl.: F01D 5/28, B32B 25/10, B32B 7/03, B32B 5/12, B32B 5/14

(54) **COMPOSITE FAN BLADE AIRFOIL, METHODS OF MANUFACTURE THEREOF AND ARTICLES COMPRISING THE SAME**

(30) Priority: 06.08.2021 US 202163230514 P
(71) Applicant: Raytheon Technologies Corporation, Farmington, CT 06032 (US)
(72) Inventor: LI, Xuetao, South Glastonbury, 06073 (US); FINNIGAN, Peter M., Higganum, 06441 (US); LUSSIER, Darin S., Guilford, 06437 (US)
(74) Representative: Dehns

(57) **Abstract**

Disclosed herein is an article (200) comprising a first group of plies (202) having a number of plies N₁ each having unidirectional tows oriented in a first direction β₁ and a second group of plies (204) having a number of plies N₂ each having unidirectional tows oriented in a second direction β₂; where β₁ is not equal to β₂; wherein N₁ and N₂ are both integer numbers. At least one of the first group of plies (202) or the second group of plies (204) has at least one tow of different thickness from another tow, has a different tow spacing from another tow spacing, or a combination thereof.

## Description

### BACKGROUND

This disclosure (invention) relates to a composite fan blade airfoil, methods of manufacture thereof and articles comprising the same. In particular, this disclosure relates to composite fan blades that contain interleaved plies to provide better reinforcement and strength to the fan blade.

Fan blade airfoils are composed of hundreds of prepreg, unidirectional prepreg tows, that fill the blade volume. In order to increase resistance to damage to an airfoil (especially in their ability to withstand a bird strike), design iteration and optimization are conducted with ply layups for hundred plies of composite fabric. Ply layup comprises two primary sets of parameters: ply orientation and ply stack sequence. Ply orientation defines fiber angle for each individual unidirectional ply. Optimization processes of ply orientation evaluates and manages stress or strain at each ply and all critical locations, with the goal of driving maximum use of material (primarily fiber strength). Ply stack sequence defines staggering of plies with different boundaries, with goal of dispersing and interleaving long and short plies. This is done to increase the path of a crack by obstructing the path that the crack would take to result in failure.

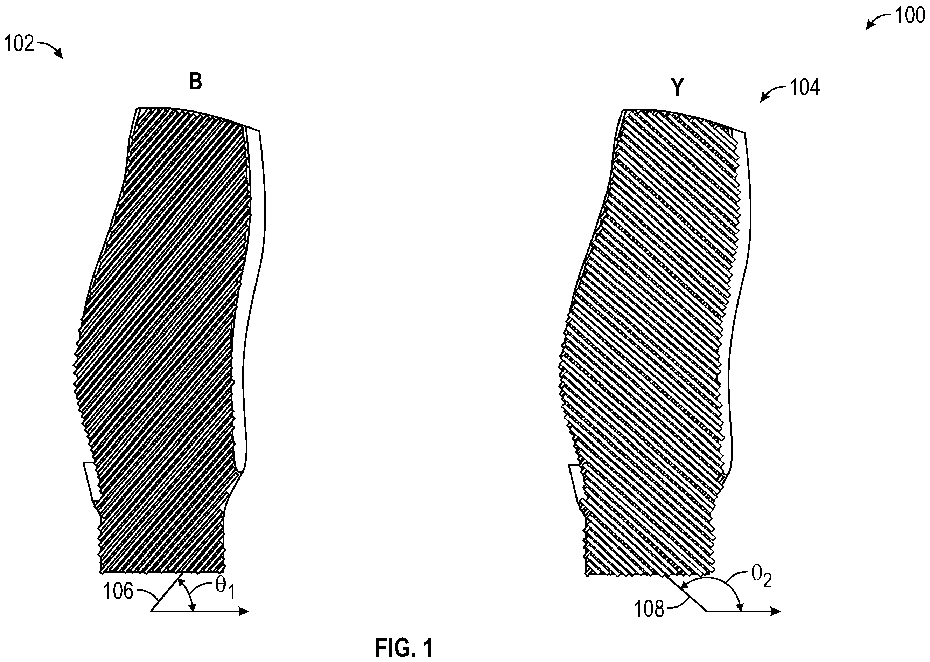

FIG. 1 is an exemplary depiction of a prior art airfoil 100 which comprises two adjacent cross plies - first ply 102 and second ply 104. Cross-plies 102 and 104 are bonded together (not shown) to form the air foil 100. In first ply 102 all of the tows (that form the ply) are unidirectional and all lie in a first direction θ₁ (indicated by numeral 106) for the entire course of the first ply 102, while in the second ply 104 all of the tows (that form the ply) are unidirectional and all lie in a second direction θ₂ (indicated by numeral 108) for the entire course (i.e., the entire thickness) of the second ply 104. Both angles θ₁ an θ₂ are measured from the same direction and may be seen to be different from one another, with θ₂ being greater than θ₁. The first ply 102 is then bonded to the second ply 104 to form the airfoil 100. In the FIG. 1 each ply contains a plurality of unidirectional tows without any laps or gaps per tow. Each ply has tows of the same thickness, denier, and fiber count.

This design has several drawbacks notably that congregation of tows in the first ply being angled in a first direction and the congregation of tows in the second ply being angled in a second direction provides a path to delamination between the first and second plies. The segregation of first plies to one portion of the airfoil and second plies to another part of the airfoil prevents the development of crack arresting mechanisms that can improve damage tolerance and mitigate crack initiation. There is therefore a need to develop airfoils where plies can be dispersed to increase crack arresting mechanisms to improve damage tolerance.

### SUMMARY

According to an aspect of the present invention, there is an article comprising a first group of plies having a number of plies N₁ each having unidirectional tows oriented in a first direction β₁ and a second group of plies having a number of plies N₂ each having unidirectional tows oriented in a second direction β₂; where β₁ is not equal to β_{2;} wherein N₁ and N₂ are both integer numbers. At least one of the first group of plies or the second group of plies has at least one tow of different thickness from another tow, has a different tow spacing from another tow spacing, or a combination thereof.

Optionally, the article further comprises a third group of plies having a number of plies N₃ each having unidirectional tows oriented in a third direction β₃. The sum of N₁, N₂ and N₃ may be equal to the total number of plies in a previous course of plies.

Optionally, the article further comprises a fourth group of plies having a number of plies N₄ each having unidirectional tows oriented in a fourth direction β₄. The sum of N₁, N₂, N₃ and N₄ may be equal to the total number of plies in a previous course of plies.

Optionally, N₁ is equal to N₂.

Optionally, N₁ is not equal to N₂.

Optionally, N₁, N₂, N₃ and N₄ are the same as each other.

Optionally, N₁ is equal to N₃ and N₂ is equal to N₄ where N₁ and N₃ represent the number of plies in odd numbered plies measured from any given ply and where N₂ and N₄ represent the number of plies in even numbered plies measured from the same give ply.

Optionally, N₁, N₂, N₃ and N₄ are all different from each other.

Optionally, β₁ is equal to β₃ and β₂ is equal to β₄.

Optionally, β₁, β₃, β₂ and β₄ are all different from each other.

Optionally, the first group of plies has an average tow thickness of Tn1 that is different from average tow thickness Tn2 of the second group of plies.

Optionally, the first group of plies has an average tow spacing of dn1 that is different from average tow spacing dn2 of the second group of plies.

Optionally, the first group of plies has an average tow thickness of Tn1 and an average tow spacing of dn1 which is different from an average tow thickness Tn2 and an average tow spacing dn2 of the second group of plies.

Optionally, the at least one tow of different thickness comprises fibers of a different denier from that of neighboring tows or wherein the fiber counts per tow is different from that of neighboring tows.

According to another aspect of the present invention, there is a method comprising contacting a first group of plies with a second group of plies; wherein the first group of plies have a number of plies N₁ each having unidirectional tows oriented in a first direction β₁ and the second group of plies have a number of plies N₂ each having unidirectional tows oriented in a second direction β_{2;} where β₁ is not equal to β_{2;} where N₁ and N₂ are both integer numbers. At least one of the first group of plies or the second group of plies has at least one tow of different thickness from another tow, has a different tow spacing from another tow spacing, or a combination thereof. The first group of plies and the second group of plies are subjected to a higher pressure and temperature to bond the first group of plies to the second group of plies to create a composite.

Optionally, the method further comprises exposing the first group of plies and the second group of plies to chemical vapor infiltration.

Optionally, the first group of plies has an average tow thickness of Tn1 that is different from average tow thickness Tn2 of the second group of plies.

Optionally, the first group of plies has an average tow spacing of dn1 that is different from average tow spacing dn2 of the second group of plies.

Optionally, the first group of plies has an average tow thickness of Tn1 and an average tow spacing of dn1 which is different from an average tow thickness Tn2 and an average tow spacing dn2 of the second group of plies

Optionally, the at least one tow of different thickness comprises fibers of a different denier from that of neighboring tows or wherein the fiber counts per tow is different from that of neighboring tows.

### BRIEF DESCRIPTION OF THE FIGURES

FIG. 1 is an exemplary depiction of a prior art airfoil which comprises two adjacent cross plies - a first ply and second ply that is differently oriented from the first ply;
FIG. 2 depicts one particular manner of stacking the groups of plies to form an airfoil such as a fan blade; and
FIG. 3 depicts a ply with different tow thicknesses and spacing between tows.

### DETAILED DESCRIPTION

Disclosed herein is a scheme for manufacturing a laminated composite fan blade by using an Automated Fiber Placement (AFP) program. The AFP method builds up a laminate by laying up individual carbon tow in courses across a tool surface as compared with manually placing layers of fabric sheets with pre-cut net shape. The AFP process is based on Computer Numerically Controlled (CNC) program to lay each tow in designated course and sequence, it provides more manufacturing flexibilities and controllability, as well as increases production rate and precision. The method expands design space and manufacturing flexibility towards a goal of improving fan blade overall impact resistance and tolerance.

The method comprises dividing the number of plies in a given course (a course is a set of tows that are laid down in one run) into a given number of smaller groups (than the original grouping or the original intended grouping) with each group having a particular tow orientations and stacking these groups of plies together such that one group has a different orientation from a neighboring group when they are stacked together.

Layered structures define a wide variety of construction arrangements, including lightweight laminated composite articles. Laminated composites typically are defined by a continuous, essentially planar array of continuous fibers embedded in a matrix defining a lamina or ply, a plurality of plies forming a laminate composite. These composite articles can be arranged to meet various in-plane stiffness or strength needs by appropriate stacking of similar orthotropic plies of dissimilar orientation. Ceramic matrix composites generally comprise fibers that comprise silicon carbide, oxide ceramics, carbon, or a combination thereof. Exemplary matrix materials include SiC, Al₂O₃, BN, B₄C, Si₃N₄, MoSi₂, SiO₂, SiOC, SiNC SiONC, or a combination thereof. An exemplary combination of fiber and matrix (in a CMC) is silicon carbide fibers and a silicon carbide matrix.

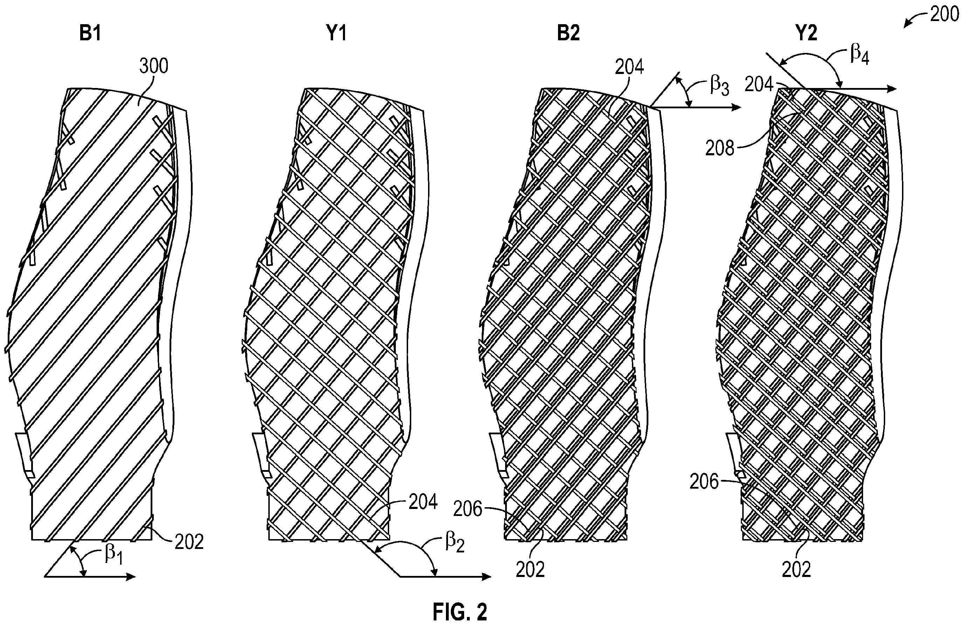

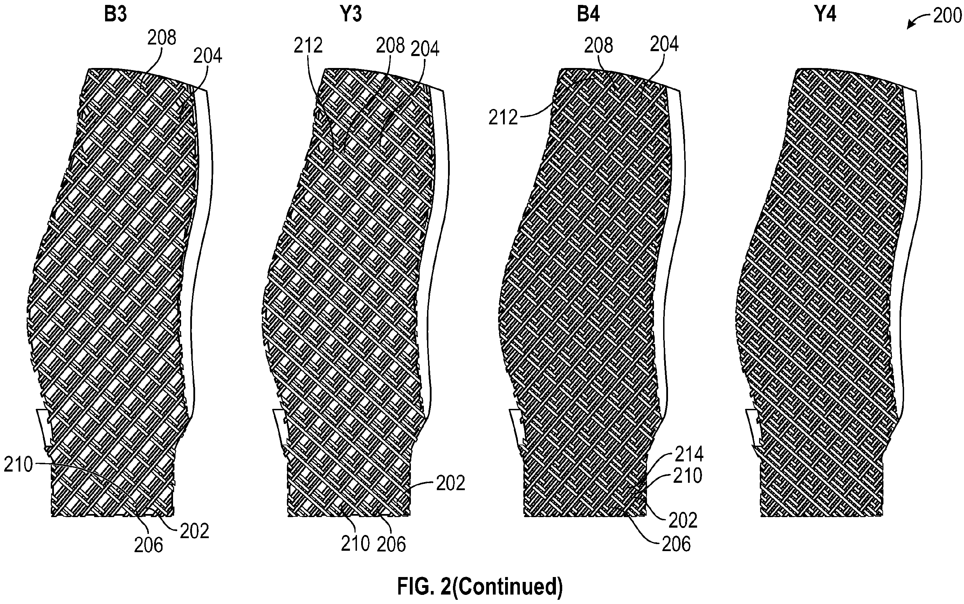

FIG. 2 depicts one particular manner of stacking the groups of plies to form an airfoil such as a fan blade 200. In the first step labelled B1, the first smaller group of plies 202 of number N₁ having unidirectional tows all inclined at an angle β₁ (with respect to a given direction) is disposed on a tool 300 surface. All subsequent angles disclosed herein are measured with respect to this particular direction.

The smaller group of plies have a number of plies N₁ that are a fraction of the total number of plies used in a given course of the volume of the fan blade 200. In the next step labelled Y1, a second group of plies 204 (which are a fraction N₂ of the total number of plies used in the given course of the volume of the fan blade 200) having unidirectional tows all inclined at an angle β₂ is disposed on a surface for the first group of plies 202. The smaller second group of plies of number N₂ can have the same number of plies N₁ used in the smaller first group of plies. In an embodiment, N₁ can be the same as N₂. Alternatively, N₁ can be greater or smaller than N₂. In a preferred embodiment, N₁ is equal to N₂. N₁ and N₂ are integers and may be either odd or even numbers. The angle β₁ is typically different from the angle β₂. In one embodiment, β₂ is equal to 180-β₁.

In the next step labelled B2, a third group of plies 206 (which are a fractional number N₃ of the total number of plies used in the given course of the volume of the fan blade 200) having unidirectional tows all inclined at an angle β₃ is disposed on a surface for the second group of plies 204. N₃ can be the same or different from N₁ or N₂. The angle β₃ can be the same or different from β₁. In a preferred embodiment, the angle β₃ is the same as the angle β₁.

In the next step labelled Y2, a fourth group of plies 208 (which are a fractional number N₄ of the total number of plies used in the given course of the volume of the fan blade 200) having unidirectional tows all inclined at an angle β₄ is disposed on a surface for the third group of plies 206. N₄ can be the same or different from N₁, N₂ or N₃. The angle β₄ can be the same or different from β₂. In a preferred embodiment, the angle β₄ is the same as the angle β₂.

In this manner consecutive groups of plies 210, 212, 214, and so on can be added to the preceding groups of plies as seen in the FIG. 2.

In an embodiment, the angles of the tows in each ply and the number of plies in each group may be the same as that of a preceding even numbered and/or odd numbered ply. For example, the number of plies in each even numbered group (e.g., the 2^{nd} group, the 4^{th} group and the 6^{th} group, and so on) may be the same (as each other) and the unidirectional tow angles of each of these groups (β₂, β₄, β₆, and so on) may be the same with respect to a given direction. Likewise, the number of plies in each odd numbered group (e.g., the 1^{st} group, the 3^{rd} group and the 5^{th} group, and so on) may be the same (as each other) and the unidirectional tow angles of each of these groups (β₁, β₃, β₅, and so on) may be the same with respect to a given direction.

In an embodiment, there may be a mathematical relationship between the number of plies and the tow angles in one group with respect to another group of plies in the stack.

For example, in an embodiment, the number of plies in each group may be the same as that preceding even numbered and odd numbered ply. In other words, N₁ = N₂ = N₃ = N₄, and so on and the angles for the odd numbered plies (β₁, β₃, β₅, and so on) are equal to one another while those for the even numbered plies (β₂, β₄, β₆, and so on) are also equal to one another. In such an embodiment, the orientation of the odd numbered plies may be symmetrical to those of the even numbered plies.

In another embodiment, the mathematical relationship between different groups of plies (as well as the tow angles for each group of plies) may follow a series relationship, where the series relationship is dictated by a geometrical series, a binomial series, and so on. For example, each succeeding group of plies in the stack can be twice the number of plies in the preceding group and have a two angle that is twice the preceding tow angle (measured with respect to a particular direction.) For example, if the first group 202 has two plies each oriented at an angle β₁, then the second group 204 will have 4 plies (twice the number of plies in the first group) inclined at an angle β₂ (=2 β₁). The third group 206 will have 8 plies (twice the number of plies in the second group) inclined at an angle β₃ (=2 β₂). This arrangement can be followed for all plies present in the entire volume of the fan blade. The groups of plies can thus be arranged to permit desired mathematical relationships between different plies.

In yet another embodiment, the number of plies in different groups N₁, N₂, N₃, N₄, and so on, may be randomly distributed and there is no numerical relationship between the number of plies in different groups.

Other variations may also be used in order to prevent a continuum of regions that have concentrations of the matrix material throughout the composite. Cracks and delamination typically progress through regions where the matrix material is concentrated. It is therefore desirable to disrupt regions where such matrix concentrations occur by ensuring that one or more plies distributed through them. The segregation of plies often provides a clean delamination path leading from one surface of the wing to another surface (e.g., upper camber to lower camber or upper camber to trailing edge, left wingtip to right wingtip or leading edge to trailing edge). Matrix concentrations typically occur between plies (e.g., at ply drops, where a ply drop is the borderline between plies in any given plane), at pores that are located between the tows in a ply or in a series of plies, and so on.

By changing the tow angle in successive plies (as detailed above), by varying tow spacing or tow thickness in a given ply or in a series of plies, the ability of a crack to propagate along any imaginary straight plane or line from the upper camber to the lower camber (or spanwise from one wingtip to the other or chordwise from leading edge to trailing edge) of the composite fan blade is made tortuous thus preventing the crack from easily propagating and eventually leading to greater damage.

One manner of reducing the ability of a crack to propagate from one surface of the blade to another surface of the turbine blade is to change the average spacing between tows in a single ply, to change the average spacing between tows in different plies in a systematic or a random manner, to deploy tows having different deniers in a ply, or a combination thereof.

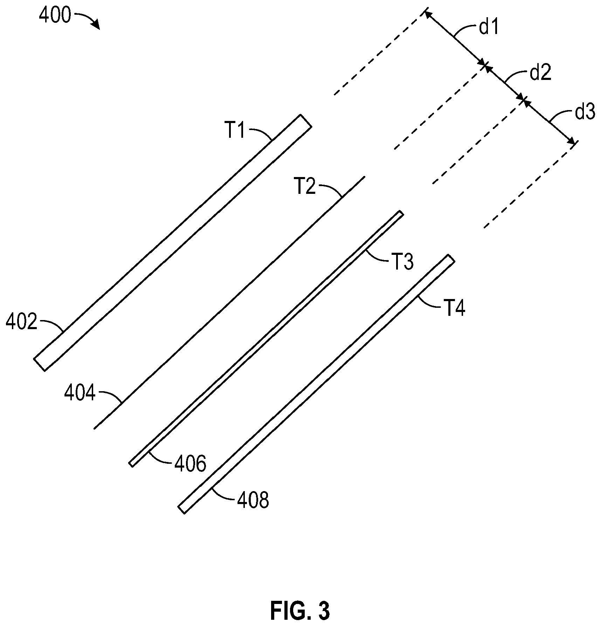

FIG. 3 is a schematic that depicts one exemplary embodiment where a ply 400 may comprise a plurality of different sized tows 402, 404, 406, 408..., and so on that are of different respective thicknesses T1, T2, T3, T4,...., and so on and that have different spacings d1, d2, d3,...., and so on, between successive tows in a ply. While the FIG. 3 depicts 4 tows in the ply having 3 different spacings, there may be a plurality (2 or more, 4 or more, 10 or more, 50 or more, and so on) of tows in the ply. It should also be noted that the tows in the ply 400 may have the same thickness but be spaced variably, or alternatively, have variable thicknesses but be spaced at a uniform distance apart.

With reference now to the FIG. 3, the tow 402 has a greater thickness T1 than tows 404 (having thickness T2), 406 (having thickness T3) and 408 (having thickness T4). It can be seen that T1 is different from T2, which is different from T3 or T4. In other words, each tow has a different thickness. In the FIG. 3, T1>T4>T3>T2. The difference in thickness of the tows may be because each tow comprises fibers of a different denier (size) or because there are a different number of fibers all of the same size in each tow. The average thickness of the tows in the ply 400 may be represented by Tn1, where Tn1 is the sum of all tow thicknesses in a ply divided by the number of tows in the ply.

In addition, the spacing d1 between tow 402 and 404 is different from spacing d2 between tow 404 and 406, which is different from spacing d3 between tows 406 and 408. In other words, the spacing between different tows are all different. This difference in spacing may be because each tow comprises fibers of a different denier (size), because there are a different number of fibers all of the same size in each tow, or because the tows are spaced differently by design. The average spacing of the tows in the ply 400 may be represented by dn1, where dn1 is the sum of all spacings between tows in a ply divided by the number of tows in the ply minus 1 (since there are always one more tow than spacings).

In an embodiment, a number of plies (not shown) each with different average tow thicknesses Tn1, Tn2, Tn3, and so on, but each with one average spacing dn1 may be bonded together to form a composite. In another embodiment, a number of plies (not shown) each with one average tow thickness Tn1 but each one with different average spacings of dn1, dn2, dn3, and so on, may be bonded together to form a composite. In yet another embodiment, a number of plies (not shown) each with different average tow thicknesses Tn1, Tn2, Tn3, and so on, where each ply has a respective different average spacing of dn1, dn2, dn3, and so on, may be bonded together to form a composite. It should also be noted that the tows in the ply 400 may have the same thickness but be spaced variably, or alternatively, have variable thicknesses but be spaced at a uniform distance apart.

It is further envisioned that one or more plies depicted in the FIG. 3 (in the composite) may be rotated to have a different angle (with regard to a selected direction). In an embodiment, each ply may be rotated to have a different angle. In this manner, various combinations of tow spacings, tow thicknesses and ply rotation angles can be envisioned (too numerous to document).

By using plies with tows of different thicknesses with different spacings and/or oriented at different angles, regions of matrix concentrations can be dispersed thus preventing crack propagation and delamination. This arrangement reduces the number of regions of matrix concentration thus preventing crack propagation from one region of matrix concentration to another region of matrix contamination. The reduces the probability of delamination and increases the life cycle performance of the turbine blade.

After laying up the plies as prescribed above, the interleaved plies are bonded at elevated temperatures and pressures in an autoclave to form the fan blade. The shuffling of the plies and the positional sequences may be prescribed by a computer.

The method detailed above is advantageous in that different composites (textiles) can be formed by interleaving across various number of plies e.g., two sets of directional tows to form orthogonal weave, three sets of directional tows to form triaxial braids, and larger numbers (than three) of tows to form more through thickness interlocking. Different tow width can also be used to find balance between structural complexity and efficiency e.g., multiple tows can be laid simultaneously in any one direction to cover more area running each course, so that entire process time could be reduced. Stacking up tows in thickness can be conducted to achieve larger undulation e.g., multiple tows can be stacked up at the same course thickness-wise, so larger tow cross section area and undulation may be achieved.

In one embodiment, in one method of manufacturing a composite, a first group of plies is contacted with a second group of plies; wherein the first group of plies have a number of plies N₁ each having unidirectional tows oriented in a first direction β₁; and the second group of plies have a number of plies N₂ each having unidirectional tows oriented in a second direction β₂. N₁ and N₂ are both integer numbers and β₁ is may or may not be equal to β₂. At least one of the first group of plies or the second group of plies has at least one tow of different thickness from another tow. The at least one tow of different thickness may be either in the first group of plies or the second group of plies and the another tow may be either in the first group of plies or the second group of plies. The at least one different tow spacing from another tow spacing can exist between two sets of tows in the same ply or between a set of tows in the first group of plies and a set of tows in the second group of plies.

After contacting the first group of plies with the second group of plies, the combination may be subjected to a higher pressure and temperature to bond the first group of plies to the second group of plies to create a composite. During the contact, the composite may be subjected to vapor infiltration with the chemicals listed above. The vapors condense on the plies and undergo a reaction to form a matrix.

This method provides customizable AFP skip & jump interleaving schemes that can be used to create a tow interlocking mechanism that improves mechanical behavior and achieves desired impact performance. It mitigates the risk of excessive damage or material loss and achieve higher impact resistance and tolerance under circumstances of impact loading. Improves loading shedding between adjacent plies when specific ply or orientation exceed allowable damage. It creates an interlaminar crack (i.e., delamination) arresting mechanism due to tow interlocking and thus improves composite airfoil damage tolerance when interlaminar crack onset occurs. It allows more user control and expanded design flexibility for layup optimization. It works seamlessly with existing AFP manufacturing methods without creating manual or additional process stops and improves the maximum capability of the AFP process.

While the invention has been described with reference to some embodiments, it will be understood by those skilled in the art that various changes may be made and equivalents may be substituted for elements thereof without departing from the scope of the invention. In addition, many modifications may be made to adapt a particular situation or material to the teachings of the invention without departing from essential scope thereof. Therefore, it is intended that the invention not be limited to the particular embodiments disclosed as the best mode contemplated for carrying out this invention, but that the invention will include all embodiments falling within the scope of the appended claims.

## Claims

1. An article (200) comprising:
a first group of plies (202) having a number of plies N₁ each having unidirectional tows oriented in a first direction β₁; and
a second group of plies (204) having a number of plies N₂ each having unidirectional tows oriented in a second direction β₂; where β₁ is not equal to β_{2;} wherein N₁ and N₂ are both integer numbers; wherein at least one of the first group of plies (202) or the second group of plies (204) has at least one tow of different thickness (T1, T2, T3, T4) from another tow, has a different tow spacing (d1, d2, d3) from another tow spacing, or a combination thereof.

2. The article (200) of claim 1, further comprising a third group of plies (206) having a number of plies N₃ each having unidirectional tows oriented in a third direction β₃.

3. The article (200) of claim 2, further comprising a fourth group of plies (208) having a number of plies N₄ each having unidirectional tows oriented in a fourth direction β₄.

4. The article (200) of any preceding claim, wherein N₁ is equal to N₂.

5. The article (200) of any of claims 1 to 3, wherein N₁ is not equal to N₂.

6. The article (200) of claim 3, where N₁, N₂, N₃ and N₄ are the same as each other.

7. The article (200) of claim 3, wherein N₁ is equal to N₃ and N₂ is equal to N₄ where N₁ and N₃ represent the number of plies in odd numbered plies measured from any given ply and where N₂ and N₄ represent the number of plies in even numbered plies measured from the same given ply.

8. The article (200) of claim 3, wherein N₁, N₂, N₃ and N₄ are all different from each other.

9. The article (200) of any of claims 3, 6, 7, or 8, wherein β₁ is equal to β₃ and β₂ is equal to β₄.

10. The article (200) of any of claims 3, 6, 7, or 8, wherein β₁, β₃, β₂ and β₄ are all different from each other.

11. The article (200) of any preceding claim, wherein:
the first group of plies (202) has an average tow thickness of Tn1 that is different from an average tow thickness Tn2 of the second group of plies (204); and/or
the first group of plies (202) has an average tow spacing of dn1 that is different from an average tow spacing dn2 of the second group of plies (204).

12. A method comprising:
contacting a first group of plies (202) with a second group of plies (204); wherein the first group of plies (202) have a number of plies N₁ each having unidirectional tows oriented in a first direction β₁; and the second group of plies (204) have a number of plies N₂ each having unidirectional tows oriented in a second direction β_{2;} where β₁ is not equal to β_{2;} where N₁ and N₂ are both integer numbers; wherein at least one of the first group of plies (202) or the second group of plies (204) has at least one tow of different thickness from another tow, has a different tow spacing from another tow spacing, or a combination thereof; and
subjecting the first group of plies (202) and the second group of plies (204) to a higher pressure and temperature to bond the first group of plies (202) to the second group of plies (204) to create a composite.

13. The method of claim 12, further comprising exposing the first group of plies (202) and the second group of plies (204) to chemical vapor infiltration.

14. The method of claim 12 or 13, wherein:
the first group of plies (202) has an average tow thickness of Tn1 that is different from an average tow thickness Tn2 of the second group of plies (204); and/or
the first group of plies (202) has an average tow spacing of dn1 that is different from an average tow spacing dn2 of the second group of plies (204).

15. The article (200) or method of any preceding claim, wherein the at least one tow of different thickness comprises:
fibers of a different denier from that of neighboring tows; or
fiber counts per tow different from that of neighboring tows.
